# EUROPÄISCHE PATENTANMELDUNG

(11) **EP 1 416 602 A2**
(43) Veröffentlichungstag der Anmeldung: **06.05.2004**
(21) Anmeldenummer: 03021974.5
(22) Anmeldetag: 30.09.2003
(51) Int. Cl.: H02G 3/22, F16L 5/06

(54) **Kabeldurchführung**

(30) Priorität: 25.10.2002 DE 20216556 U
(71) Anmelder: Wieland Electric GmbH, 96052 Bamberg (DE)
(72) Erfinder: Blösch, Christoph, Dipl.-Ing., 91088 Bubenreuth (DE)
(74) Vertreter: Tergau & Pohl Patentanwälte

(57) **Zusammenfassung**

Die Erfindung betrifft eine Kabeldurchführung (2) zur Befestigung an einer Wand (3) sowie ein entsprechendes Aufnahmeelement (4). Um eine besonders einfache Montage zu gewährleisten, wird vorgeschlagen, an Kabeldurchführung (2) und Aufnahmeelement (4) Befestigungselemente (13, 25) zur Ausbildung einer Schnapp- oder Rastverbindung vorzusehen.

## Beschreibung

Die Erfindung betrifft eine Kabeldurchführung zur Befestigung an einer Wand sowie ein entsprechendes Aufnahmeelement.

Kabelverschraubungen mit Gewinde und Kontermutter zum Befestigen an einer Gehäusewand sind aus dem Stand der Technik in einer Vielzahl von Ausgestaltungen bekannt. Das Funktionsprinzip dieser Kabelverschraubungen beruht darauf, dass die Kabelverschraubung durch eine zumeist kreisrunde Gehäuseöffnung gesteckt und von der Rückseite mit einer Kontermutter festgezogen wird. Durch die Verschraubung mit der Kontermutter wird dabei gleichzeitig die erforderliche Dichtkraft zwischen Gehäuse und Kabelverschraubung aufgebracht. Bei einer ausreichenden Wandstärke der Gehäusewand kann die Kabelverschraubung auch in ein in die Gehäusewand eingebrachtes Gewinde geschraubt werden. Nachteilig bei den bekannten Kabelverschraubungen ist insbesondere, dass zum Montieren der Kabelverschraubung zumeist zwei Personen erforderlich sind. Dies ist insbesondere bei größeren Gehäusen der Fall. Bei einer Montage ohne Gegenmutter muß die Gehäusewand zumindest im Bereich der Kabeldurchführung eine Dicke aufweisen, die es ermöglicht, ein geeignetes Muttergewinde anzubringen. In diesem Fall entfällt zwar das Gegenhalten von der anderen Gehäuseseite, jedoch ist das Schneiden des Gewindes in aller Regel teurer als die Verwendung einer Kontermutter und damit zumeist unwirtschaftlich. Von Nachteil ist weiterhin, dass die Montage herkömmlicher Kabelverschraubungen relativ zeitaufwendig ist und in den meisten Fällen die Verwendung eines geeigneten Werkzeugs voraussetzt.

Der Erfindung liegt die Aufgabe zugrunde, eine Kabeldurchführung zu schaffen, die besonders einfach zu montieren ist. Diese Aufgabe wird durch eine Kabeldurchführung nach Anspruch 1 bzw. durch ein Aufnahmelement nach Anspruch 9 bzw. durch eine Wand nach Anspruch 13 gelöst.

Ein wesentlicher Punkt der Erfindung liegt darin, die bisher für die Befestigung der Kabeldurchführung verwendete Schraubverbindung durch eine Schnapp- bzw. Rastverbindung zu ersetzen. Die Schnapp- bzw. Rastverbindung wird dabei vorzugsweise unmittelbar zwischen dem das Kabel aufnehmenden Gehäuse und dem an der Wand angeordneten Aufnahmeelement ausgebildet. Unter einer Schnappverbindung wird dabei eine vorzugsweise lösbare, durch elastisches Verformen erzielte Verbindung verstanden, wobei das elastische Verformen beim Fügen der miteinander zu verbindenden Bauteile ineinander erzwungen und beim Erreichen der Endstellung durch Einschnappen des verformten Bauteils rückgängig gemacht wird. Die Verbindung kann dabei auch als eine Rastverbindung ausgestaltet sein, also nach Art eines Formgehemmes, welches eine bestimmte Vorzugsstellung erzeugt und bis zu einer bestimmten Grenzkraft sichert.

Von Vorteil für eine besonders sicheres und zuverlässiges Herstellen der Schnapp- oder Rastverbindung ist es, wenn die Befestigungselemente an der auf das Aufnahmeelement zu bewegten Kabeldurchführung Schnapp- oder Rasthaken sind, während an dem ruhenden Aufnahmeelement die entsprechenden Schnapp- oder Rastausnehmungen angeordnet sind.

Eine derartige Kabeldurchführung kann eine sehr einfache Bauform aufweisen. Da weder eine Kontermutter noch ein Gewinde in der Gehäusewand zur Befestigung der Kabeldurchführung notwendig ist, kann deren Montage stets von einer einzigen Person durchgeführt werden. Ein kostspieliges Gewindeschneiden, bzw. der Einsatz weiteren Personals ist nicht erforderlich. Die erfindungsgemäße Kabeldurchführung kann aufgrund der verwendeten Verbindungstechnik, und da die Montage ausschließlich von einer Seite her erfolgt, besonders schnell ausgeführt werden. Zudem ist für den Steckvorgang kein Werkzeug erforderlich. Von Vorteil ist weiterhin, dass die Schnapp- bzw. Rastverbindung im Gegensatz zur Schraubverbindung stets in gleichbleibender Qualität reproduzierbar ist.

Mit der erfindungsgemäßen Kabeldurchführung können Kabel in einem wesentlich dichteren Raster durch eine Gehäusewand geführt werden, da ein zusätzlicher Handhabungsraum für das Konterwerkzeug nicht erforderlich ist. Hierdurch sind platzsparende und somit kostengünstige Aufbauten möglich.

Die erfindungsgemäße Kabeldurchführung kann insbesondere für solche Aufbauten verwendet werden, die Schwingungen ausgesetzt sind, da ein Losrütteln von der Gehäusewand im Gegensatz zu den herkömmlichen Kabelverschraubungen nicht möglich ist.

Die erfindungsgemäße Kabeldurchführung kann zur Durchführung eines Kabels, eines Schlauches, einer Leitung, eines Rohres oder einer biegsamen Röhre, oder einer sonstigen Zu- oder Verbindungsleitung oder dergleichen durch eine Gehäusewand, die Wand eines Gebäudes, oder ein sonstiges Begrenzungs- bzw. Teilungselement oder dergleichen verwendet werden.

In den abhängingen Ansprüchen sind teils vorteilhafte, teils für sich erfinderische Ausgestaltungen der Erfindung beschrieben.

Bei einer bevorzugten Ausführungsform der Erfindung gemäß Anspruch 2 ist das wenigstens eine Befestigungselement am Umfang des Gehäuses der Kabeldurchführung angeordnet. Dies stellt zum einen sicher, dass das Gehäuseinnere vollständig zur Aufnahme des durchzuführenden Kabels oder dergleichen verwendet werden kann. Zum anderen gewährleistet diese Anordnung eine besonders sichere Verbindung zwischen Gehäuse- und Aufnahmeelement, da sich somit ein beim Zusammenführen der zu verbindenden Teile selbsttätig schließender Verbindungsmechanismus ergibt. Vorzugsweise sind wenigstens zwei, für eine besonders sichere Verbindung wenigstens drei Befestigungselemente vorgesehen.

Die Befestigungselemente zur Ausbildung der Schnapp- bzw. Rastverbindung sind dabei nach der Lehre des Anspruchs 3 vorzugsweise in eine Aufnahmeausnehmung verschwenkbar, die in der Gehäusewand des Gehäuses angeordnet ist. Das Gehäuse ist vorteilhafterweise nach Art einer zylindrischen Hülse aufgebaut. Die Befestigungselemente sind mit anderen Worten im Gehäuse derart integriert, dass sie gegenüber Beschädigungen besonders geschützt sind. Zudem wird dadurch eine besonders sichere mechanische Kontaktierung erreicht. Aus herstellungstechnischer Sicht besonders günstig ist es, wenn die Befestigungselemente einstückig am Gehäuse angeformt sind. Insbesondere ist es von Vorteil, wenn das Gehäuse als Spritzgußteil aus einem Kunststoffmaterial hergestellt wird.

In einer weiteren bevorzugten Ausführungsform der Erfindung nach Anspruch 4 ist ein Dichtelement zur Abdichtung der Verbindung vorgesehen. Als Dichtelement wird vorzugsweise ein am Gehäuse wandseitig angeordneter Dichtring verwendet (Anspruch 5). Als Dichtring kann dabei ein handelsüblicher Dichtring in der entsprechenden Größe und Ausgestaltung verwendet werden, so dass auf relativ einfache und preiswerte Art und Weise eine ausreichende Abdichtung erreicht werden kann. Ist das Dichtelement zudem in einer Aufnahmenut am Gehäuse angeordnet (Anspruch 6), wird das Dichtelement gegen Verrutschen gesichert, was zu einer weiteren Erhöhung der Abdichtungsqualität führt.

Besonders vorteilhaft ist die Ausführungsform nach Anspruch 7, wonach die Kabeldurchführung eine im Gehäuse integrierte Zugentlastung aufweist. Als Zugentlastung kann dabei eine beliebige, aus dem Stand der Technik bekannte Zugentlastung verwendet werden. Derartige Zugentlastungen weisen üblicherweise ein zumeist hülsenartiges Dichtungselement auf, welches in den wandabgewandten Gehäuseabschnitt um das Kabel herum eingelegt ist, wobei das Dichtelement mittels einer mit dem Gehäuse verschraubbaren Überwurfmutter fixiert wird, sodass eine Zugentlastung ausgebildet wird.

Das Gehäuse weist nach der Lehre des Anspruchs 8 wenigstens ein Führungselement auf, das zur Einführung der Kabeldurchführung in das Aufnahmeelement dient. Gleichzeitig dient das Führungselement als Verstecksicherung, sodass das Gehäuse stets derart in das Aufnahmeelement eingeführt wird, dass die entsprechenden Befestigungselemente zwangsweise aufeinander zugeführt werden.

Die erfindungsgemäße Kabeldurchführung ist zur mechanischen Kontaktierung mit einem Aufnahmeelement nach Anspruch 9. Entsprechend dem wenigstens einen Befestigungselement, das bereits oben beschrieben wurde, weist das Aufnahmeelement wenigstens ein korrespondierendes Befestigungselement zur Ausbildung einer Schnapp- bzw. Rastverbindung auf. Insbesondere handelt es sich dabei um eine Schnapp- oder Rastausnehmung. Durch geeignete Formgebung des Aufnahmeelements können die beim Herstellen der Schnapp- bzw. Rastverbindung auftretenden Kräfte problemlos aufgenommen werden. Gleiches gilt für die Kräfte, die beim Anziehen der Hutmutter für die Zugentlastung auftreten können. Insbesondere ist ein Gegenhalten wie bei einer Kabelverschraubung nach dem Stand der Technik, nicht mehr erforderlich.

Um ein besonderes sicheres Verschnappen bzw. Verrasten zu gewährleisten, ist nach der Lehre des Anspruchs 10 am Aufnahmeelement ein Begrenzungsanschlag vorgesehen. Ein zu tiefes Einführen der Befestigungselemente bzw. des Gehäuses der Kabeldurchführung in das Aufnahmeelement wird dadurch wirksam vermieden.

In einem weiteren Ausführungsbeispiel ist die Schnapp- bzw. Rastverbindung lösbar ausgebildet. Dies hat gegenüber einer unlösbaren Verbindung den Vorteil, dass Kabeldurchführung und Aufnahmeelement wieder voneinander getrennt und zur Ausbildung von weiteren Schnapp- oder Rastverbindungen wiederverwendet werden können. Besonders vorteilhaft ist es in diesem Fall, wenn die Verbindung zwischen Kabeldurchführung und Aufnahmeelement auf einfache Art und Weise geöffnet werden kann. Hierzu ist nach der Lehre des Anspruches 11 wenigstens eine Betätigungsöffnung für ein Betätigungswerkzeug zur Entriegelung der Schnapp- bzw. Rastverbindung vorgesehen. Mit einer Zange oder der Klinge eines Schraubendrehers kann einfach in die Betätigungsöffnungen eingegriffen werden, wodurch die Schnapp- oder Rasthaken aus ihrer Verrastung heraus gedrückt werden können und die mechanische Kontaktierung gelöst wird. Vorzugsweise sind die am Aufnahmeelement vorgesehenen Schnapp- bzw. Rastausnehmungen zur Aufnahme der Schnapp- bzw. Rasthaken derart ausgebildet, dass sie gleichzeitig als Betätigungsöffnungen dienen.

Entsprechend dem bereits am Gehäuse vorgesehenen Führungselement zur Führung der Kabeldurchführung weist auch das Aufnahmeelement ein entsprechendes Führungselement auf (Anspruch 12). Als besonders sinnvoll hat sich hier die Ausbildung einer Nut-Feder-Verbindung erwiesen.

Das Aufnahmeelement ist erfindungsgemäß fest mit der Gehäusewand oder dergleichen verbunden (Anspruch 13). Die Verbindung zwischen Aufnahmeelement und Wand ist dabei vorzugsweise unlösbar ausgestaltet. Ist die Verbindung einstückig ausgebildet (Anspruch 14), so ergeben sich neben herstellungstechnischenVorteile auch Vorteile bei der späteren Montage. Da die die entsprechenden Aufnahmeelemente bereits bei der Herstellung der Gehäuse an der Gehäusewand angeformt werden können, verringert sich der spätere Montageaufwand.

Das Aufnahmeelement kann im Wandinneren (Anspruch 15) angeordnet sein, sofern die Wanddicke dies zulässt. Hierdurch kann der benötigte Einbauplatz verringert werden, wodurch eine besonders kompakte Ausführung erhalten wird. In einem weiteren Ausführungsbeispiel gemäß Anspruch 16 ist das Aufnahmeelement als ein aus der Wandoberfläche herausragender Aufnahmedom ausgebildet. Dabei erstreckt sich der Aufnahmedom vorzugsweise in Richtung auf das Gehäuse der Kabeldurchführung. Diese Ausführungsform ist besonders für geringe Wandstärken geeignet.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine perspektivische Ansicht einer Kabeldurchführung und eines Aufnahmelements im gelösten Zustand,
- Fig. 2: eine perspektivische Ansicht der im Aufnahmeelement montierten Kabeldurchführung,
- Fig. 3: einen Halbschnitt durch die Kabeldurchführung im montierten Zustand.

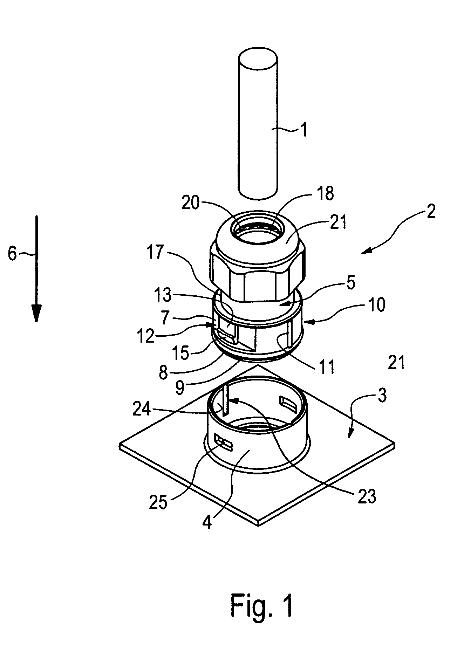

In Fig. 1 sind die für die Durchführung eines Kabels 1 erforderlichen Teile im montierten Zustand dargestellt, nämlich die Kabeldurchführung 2 sowie das in eine Wand 3 einstückig integrierte Aufnahmeelement 4. Die Kabeldurchführung 2 besteht im wesentlichen aus einem hohlzylinderförmigen Gehäuse 5. Der wandseitige, also sich in Montagerichtung 6 auf das Aufnahmeelement 4 hin erstrekkende Gehäuseabschnitt 7 ist bundartig verstärkt. Dieser Abschnitt 7 weist an seinem wandseitigem Abschluß 8 eine umlaufende Aufnahmenut 9 auf, in der ein Dichtungsring 10 einliegt.

An diesem unteren Gehäuseabschnitt 7 sind darüber hinaus zwei gegenüberliegende angeordnete Führungsstege 11 angeordnet, die am Außenmantel des Gehäuseabschnittes 7 angeformt sind und in Montagerichtung 6 verlaufen. In der durch den Bund verstärkten Gehäusewand des wandseitigen Gehäuseabschnittes 7 sind, jeweils um 90° zu den Führungsstegen 11 versetzt, zwei in etwa rechteckige Aufnahmeausnehmungen 12 eingearbeitet. In diesen Aufnahmeausnehmungen 12 sind Schnappelemente 13 angeordnet, die sich von der Oberkante 14 der Aufnahmeausnehmung 12 in Montagerichtung 6 erstrecken. Am Freiende des elastisch verformbaren Schnappelements 13 ist der eigentliche Schnapphaken 15 angeordnet, der sich über die Umfangsfläche des wandseitigen Gehäuseabschnittes 7 radial hinaus erstreckt und in die Aufnahmeausnehmung 12 hinein verschwenkbar ist. Der Schnapphaken 15 weist zur einfacheren Einführung in das Aufnahmeelement 4 eine Anlaufschräge 16 auf.

An den wandseitigen Gehäuseabschnitt 7 schließt sich ein weiterer zylindrischer Gehäuseabschnitt 17 mit kleinerem Durchmesser an. In diesem Gehäuseabschnitt 17 liegt im Bereich der dem Aufnahmeelement 4 abgewandten Gehäusestirnseite 18 ein aus dem Stand der Technik bekanntes Dichtungselement 19, beispielsweise in Form einer Dichtungshülse ein. Im Zusammenspiel mit einer ebenfalls aus dem Stand der Technik bekannten Ausgestaltung des endseitigen Abschnittes 17 des Gehäuses 5, beispielsweise in Form einer Vielzahl von sich in Gehäuselängsrichtung erstreckenden Klemmzungen 20, dient eine Hutmutter 21 zur Ausbildung einer Zugentlastung für das durch das Gehäuse 5 verlaufende Kabel 1. Ein entsprechendes Gewinde 22 für die Hutmutter 21 ist auf dem endseitigen Gehäuseabschnitt 17 aufgebracht.

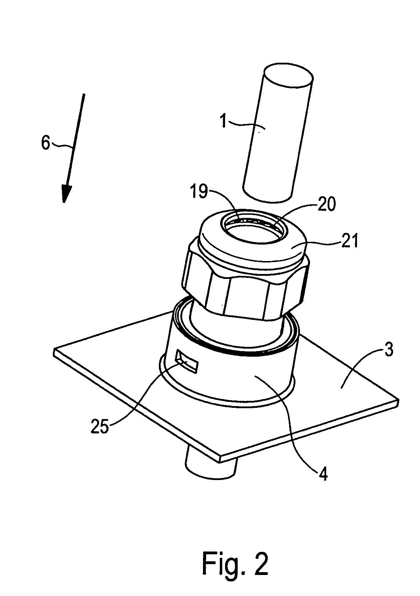

Die Kabeldurchführung 2 wird, wie in Fig. 2 dargestellt, in ein sich domartig aus der Wandebene 3 heraus erstreckendes Aufnahmeelement 4 eingeführt. Dabei greifen die Führungsstege 11 an der Kabeldurchführung 2 in entsprechend vorgesehene Führungsnuten 23 an der Innenseite 24 des kreisrunden Aufnahmeelements 4 ein. Aufgrund dieser Führung wird gewährleistet, dass die Kabeldurchführung 2 derart in das Aufnahmeelement 4 eingeführt wird, dass die Schnappelemente 13 genau auf die entsprechenden Schnappausnehmungen 25 hingeführt werden. Beim weiteren Eindrücken der Kabeldurchführung 2 in Montagerichtung 6 werden die Schnappelemente 13 in die Aufnahmeausnehmungen 12 hinein ausgelenkt, bis schließlich die Kabeldurchführung 2 in ihre Endstellung gebracht ist. In dieser Endstellung rasten bzw. schnappen die Schnapphaken 15 in die dafür vorgesehenen und entsprechend ausgeformten Schnappausnehmungen 25 ein. Die Schnappausnehmungen 25 sind als Durchbrüche im Aufnahmedom 4 ausgestaltet, sodass sie gleichzeitig als von außen zugängliche Betätigungsöffnungen zur Entriegelung der Schnappverbindung dienen.

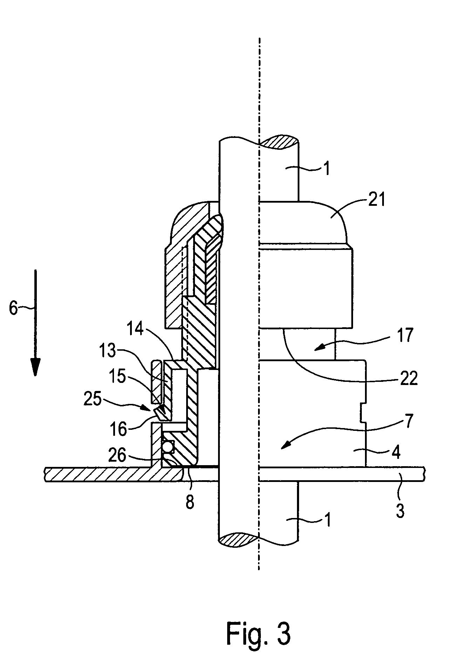

Fig. 3 zeigt die in das Aufnahmeelement 4 eingerastete Kabeldurchführung 2 in einem Halbschnitt. Beim Einführen der Kabeldurchführung 2 in den Aufnahmedom 4, der an der Wand 3 einstückig angeformt ist, schlägt die Stirnseite 8 des wandseitigen Gehäuseabschnittes 7 der Kabeldurchführung 2 gegen eine Anschlagskante 26 des Aufnahmeelements 4, die von der Wand 3 ausgehend in den Aufnahmedom 4 umlaufend hineinragt. In dieser Montageendposition ist der an der Kabeldurchführung 2 angebrachte Schnapphaken 15 in der Schnappausnehmung 25 eingeschnappt. Die Schnappausnehmung 25 dient gleichzeitig als Betätigungsöffnung, sodass beispielsweise die von außen in die Betätigungsöffnung eingeführte Klinge eines Schraubendrehers das Schnappelement 13 wieder in Richtung Aufnahmeausnehmung 12 auslenkt, sodass die Schnappverbindung gelöst werden kann. An der Innenseite 24 des Aufnahmedoms 4 liegt zwischen Schnappausnehmung 25 und Wand 3 der in der Aufnahmenut 9 einliegende Dichtungsring 10 an und dichtet die Verbindung ab.

### Bezugszeichenliste

- 1: Kabel
- 2: Kabeldurchführung
- 3: Wand
- 4: Aufnahmeelement
- 5: Gehäuse
- 6: Montagerichtung
- 7: wandseitiger Gehäuseabschnitt
- 8: untere Stirnseite
- 9: Aufnahmenut
- 10: Dichtring
- 11: Führungssteg
- 12: Aufnahmeausnehmung
- 13: Schnappelement
- 14: Oberkante
- 15: Schnapphaken
- 16: Anlaufschräge
- 17: endseitiger Gehäuseabschnitt
- 18: obere Stirnseite
- 19: Dichtelement
- 20: Klemmzunge
- 21: Hutmutter
- 22: Gewinde
- 23: Führungsnut
- 24: Innenseite
- 25: Schnappausnehmung
- 26: Anschlagskante

## Patentansprüche

1. Kabeldurchführung (2) zur Befestigung an einer Wand (3),
**gekennzeichnet durch**
- ein das Kabel (1) aufnehmendes Gehäuse (5) und
- wenigstens ein am Gehäuse (5) angeordnetes Befestigungselement (13), zur Ausbildung einer Schnapp- oder Rastverbindung mit einem ein korrespondierendes Befestigungselement (25) aufweisenden Aufnahmeelement (4).

2. Kabeldurchführung (2) nach Anspruch 1,
**dadurch gekennzeichnet,**
**dass** das Befestigungselement (13) am Umfang des Gehäuses (5) angeordnet ist derart, dass die Schnapp- oder Rastverbindung beim zumindest teilweisen Einführen des Gehäuses (5) in das Aufnahmeelement (4) hergestellt wird.

3. Kabeldurchführung (2) nach Anspruch 1 oder 2,
**dadurch gekennzeichnet,**
**dass** die Gehäusewand (7) eine Aufnahmeausnehmung (12) aufweist, in die das Befestigungselement (13) verschwenkbar ist.

4. Kabeldurchführung (2) nach einem der Ansprüch 1 bis 3,
**gekennzeichnet durch**
ein Dichtelement (10) zur Abdichtung der Verbindung.

5. Kabeldurchführung (2) nach Anspruch 4,
**dadurch gekennzeichnet,**
**dass** das Dichtelement (10) ein am Gehäuse (5) wandseitig angeordneter Dichtring ist.

6. Kabeldurchführung (2) nach Anspruch 4 oder 5,
**dadurch gekennzeichnet,**
**dass** das Gehäuse (5) eine Aufnahmenut (9) für das Dichtelement (10) aufweist.

7. Kabeldurchführung (2) nach einem der Ansprüche 1 bis 6,
**gekennzeichnet durch**
eine im Gehäuse (5) integrierte Zugentlastung für das Kabel (1).

8. Kabeldurchführung (2) nach einem der Ansprüche 1 bis 7,
**dadurch gekennzeichnet,**
**dass** das Gehäuse (5) wenigstens ein Führungselement (11), insbesondere einen Führungssteg, zur Führung im Aufnahmeelement (4) aufweist.

9. Aufnahmeelement (4) für eine Kabeldurchführung nach einem der Ansprüche 1 bis 8,
**gekennzeichnet durch**
ein Befestigungselement (25) zur Ausbildung einer Schnapp- oder Rastverbindung.

10. Aufnahmeelement (4) nach Anspruch 9,
**gekennzeichnet durch**
einen Anschlag (26) zur Begrenzung der Einführbewegung der Kabeldurchführung (2) in das Aufnahmeelement (4).

11. Aufnahmeelement (4) nach Anspruch 9 oder 10,
**gekennzeichnet durch**
wenigstens eine Betätigungsöffnung (25) zur Entriegelung der Schnappoder Rastverbindung.

12. Aufnahmeelement (4) nach einem der Ansprüche 9 bis 11,
**gekennzeichnet durch**
wenigstens ein Führungselement (23), insbesondere eine Führungsnut, zur Führung der Kabeldurchführung (4).

13. Wand (3) mit einem Aufnahmeelement (4) nach einem der Ansprüche 9 bis 12,
**dadurch gekennzeichnet,**
**dass** das Aufnahmeelement (4) an der Wand (3) befestigt ist.

14. Wand (3) nach Anspruch 13
**dadurch gekennzeichnet,**
**dass** das Aufnahmeelement (4) einstückig mit der Wand (3) verbunden ist.

15. Wand (3) nach Anspruch 13 oder 14,
**gekennzeichnet durch**
ein im Wandinneren angeordnetes Aufnahmeelement (4).

16. Wand (3) nach einem der Ansprüche 13 bis 15,
**gekennzeichnet durch**
ein domartig aus der Wandoberfläche herausragendes Aufnahmeelement (3).
